(19) Europäisches Patentamt
European Patent Office
Office européen des brevets

(11) **EP 0 737 941 B1**

(12) **EUROPÄISCHE PATENTSCHRIFT**

(45) Veröffentlichungstag und Bekanntmachung des Hinweises auf die Patenterteilung:
**14.05.2003   Patentblatt 2003/20**

(51) Int Cl.$^7$: **G06T 17/20**

(21) Anmeldenummer: **96200490.9**

(22) Anmeldetag: **26.02.1996**

(54) **Verfahren und Anordnung zur Nachbildung der Oberfläche eines Objekts**

Method and device for reconstructing the surface of an object

Procédé et dispositif de reconstruction de la surface d'un objet

(84) Benannte Vertragsstaaten:
**DE FR GB**

(30) Priorität: **11.03.1995  DE 19508823**

(43) Veröffentlichungstag der Anmeldung:
**16.10.1996   Patentblatt 1996/42**

(73) Patentinhaber:
• **Philips Intellectual Property & Standards GmbH**
  **20099 Hamburg (DE)**
  Benannte Vertragsstaaten:
  **DE**
• **Koninklijke Philips Electronics N.V.**
  **5621 BA Eindhoven (NL)**
  Benannte Vertragsstaaten:
  **FR GB**

(72) Erfinder:
• **Wischmann, Hans-Aloys, Dr.**
  **D-22335 Hamburg (DE)**
• **Drenckhahn, Ralf, Dipl.-Phys.**
  **D-22335 Hamburg (DE)**

(74) Vertreter: **Volmer, Georg, Dipl.-Ing. et al**
**Philips Corporate Intellectual Property GmbH,**
**Postfach 50 04 42**
**52088 Aachen (DE)**

(56) Entgegenhaltungen:
• **PROCEEDINGS OF THE INTERNATIONAL CONFERENCE ON COMPUTER VISION, BERLIN, MAY 11 - 14, 1993, Nr. CONF. 4, 11.Mai 1993, INSTITUTE OF ELECTRICAL AND ELECTRONICS ENGINEERS, Seiten 129-136, XP000436225 CHEN X ET AL: "VISION-BASED CONSTRUCTION OF CAD MODELS FROM RANGE IMAGES"**
• **BIOMECHANICS, REHABILITATION, ELECTRICAL PHENOMENA, BIOMATERIALS, SAN DIEGO, OCT. 28 - 31, 1993, Bd. 15 PART 3, 28.Oktober 1993, SZETO A;RANGARAJ M RANGAYYAN, Seite 1476/1477 XP000452942 HONG ZHOU ET AL: "ON MESH REFINEMENT AND ACCURACY OF NUMERICAL SOLUTIONS"**

**Beschreibung**

Die Erfindung betrifft ein Verfahren zur Nachbildung der Oberfläche eines Objekts nach Anspruch 1 und eine Anordnung nach Anspruch 4. Ein Anwendungsgebiet dieses Verfahrens ist die Untersuchung bioelektrischer und biomagnetischer Signale in der Medizin, speziell die Analyse von Elektroenzephalogramm/Elektrokardiogramm (EEG/EKG) und Magnetoenzephalogramm/Magnetokardiogramm (MEG/MKG). Genaue Rekonstruktionen elektrischer Ströme im menschlichen Körper mit Hilfe der Boundary-Element-Methode (BEM) sind nur möglich, wenn die elektromagnetischen Signale auf der Basis eines realistischen Körpermodells berechnet werden können, das z.B. aus MR- oder CT-Bildern gewonnen wurde.

Ein Verfahren zur Rekonstruktion der räumlichen Stromdichteverteilung in einem biologischen Objekt ist aus der EP-A 406 963 bekannt. Die bioelektrischen und biomagnetischen Signale eines Patienten werden von außen, d.h. nicht invasiv, gemessen. Diese Signale werden jedoch vornehmlich durch rückfließende, sogenannte Volumenströme im Innern des Körpers erzeugt, die von der räumlichen Verteilung der Leitfähigkeit abhängen. Daher ist eine korrekte Modellierung des realen Körpervolumens unerläßlich, bei der nicht nur die äußeren Konturen, sondern auch die Grenzflächen innerer Organe (bzw. von Geweben mit einheitlicher Leitfähigkeit) beschrieben werden müssen.

Bei der Rekonstruktion der Signale wird dann dieses abstrahierte Volumenleitermodell des Körpers verwendet. Analytische Formeln existieren nur für einfache geometrische Volumina wie etwa Kugeln. Die zu untersuchenden Körperregionen (z.B. der Brustkorb oder der Kopf) können aber im allgemeinen durch solche einfachen Geometrien nicht hinreichend genau wiedergegeben werden. Bei der Boundary-Element-Methode (im weiteren immer mit BEM abgekürzt) wird ein Körper durch eine Vielzahl kleiner Oberflächenelemente näherungsweise beschrieben.

Aus IEEE Transact. on Biomed. Engineering, Vol. 36, No. 3, S. 382-391 ist ein Verfahren bekannt, bei dem mit Hilfe der BEM die Quellen elektromagnetischer Signale eines Körpers bestimmt werden. Die dabei zu berechnenden Integrale über die Grenzfläche des Körpers werden durch Summationen über kleinere Dreiecksflächen, die als zusammenhängendes Netz die Körperoberfläche näherungsweise beschreiben, ersetzt. An einer Anzahl von diskreten Stützpunkten - hier den Dreiecksmittelpunkten - werden die Integrale einzeln numerisch berechnet.

In der Anwendung des Verfahrens bei der Analyse von EEG/ECG und MEG/MCG ist bei der Summation ein Skalarprodukt bzw. ein Vektorprodukt mit der lokalen Oberflächennormalen zu berechnen. Auf einem ebenen Dreieck ist die Flächennormale über das ganze Dreieck konstant und nur näherungsweise gleich dem Mittel der veränderlichen Normalen des modellierten Oberflächenabschnitts. Die Verwendung lokal möglichst korrekter Oberflächennormalen ist also eine grundlegende Voraussetzung für korrekte Integrationswerte und damit für eine genaue Rekonstruktion.

Aus "Vision Based Construction of CAD Models from Range Images" von Chen et. al. (Proceedings of ICCV, Berlin, May 11-14, 1993, IEEE) ist ein rechenaufwendiges Verfahren zur Verfeinerung einer Objektriangulierung bekannt, in welchem zuerst eine kontinuierliche Oberfläche mittels "triangular Gregory Bezier" (tGB) Interpolation gewonnen wird. Jedes dieser tGB-"patches" wird durch 15 Kontrollpunkte im 3D Raum so definiert, dass echte Diskontinuitäten erhalten bleiben, ansonsten aber kontinuierliche Übergänge zwischen den "patches" resultieren. Zusätzliche Punkte werden dort eingeführt, wo die kontinuierliche Beschreibung die größte Abweichung liefert.

Der Erfindung liegt die Aufgabe zugrunde, ein Verfahren der eingangs genannten Art derart auszugestalten, daß eine Erhöhung der Genauigkeit der Oberflächenbeschreibung erreicht wird, wobei der Aufwand insbesondere an Rechenzeit und Speicherbedarf möglichst gering sein soll.

Erfindungsgemäß wird diese Aufgabe dadurch gelöst, daß durch zwei Eckpunkte des Ausgangsdreiecks eine bogenförmige Verbindungslinie gelegt wird derart, daß die Verbindungslinie senkrecht zu den Normalen in den Eckpunkten des Ausgangsdreiecks verläuft, und daß ein neuer Eckpunkt eines Teildreiecks auf der bogenförmigen Verbindungslinie gewählt wird.

Bei dem bekannten Verfahren wird auf jeder der drei Seiten eines Ausgangsdreiecks in der Mitte jeweils ein neuer Eckpunkt gewählt. Mit diesen drei neuen Eckpunkten und den drei ursprünglichen Eckpunkten wird das Ausgangsdreieck in vier kleinere Teildreiecke zerlegt. Da die Teildreiecke jedoch in der Ebene des Ausgangsdreiecks liegen, wird durch diese Verfeinerung des Dreiecknetzes die Beschreibung der Objektoberfläche nicht wesentlich verbessert.

Bei dem erfindungsgemäßen Verfahren wird die lokale Krümmung des Objektes berücksichtigt, so daß die Oberfläche wesentlich exakter beschrieben wird. Mit einer bogenförmigen Verbindungslinie ist dabei eine von der geraden Verbindungslinie (= Kantenlinie eines Ausgangsdreiecks) abweichende, nur in eine Richtung gekrümmte Linie gemeint. Mehrfach gekrümmte Linien wie eine oder mehrere Sinusschwingungen seien darunter nicht verstanden. Die unterschiedlichen Oberflächennormalen der neuen Teildreiecke stimmen deutlich besser mit den lokalen Normalen des vorgegebenen Objektes überein als der konstante Wert der Oberflächennormalen der bisherigen planen Teildreiecke. Ohne daß Informationen über die neuen Eckpunkte zuvor bekannt oder gespeichert sind, kann auf einfache und schnelle weise die Objektoberfläche durch räumlich angepaßte Teildreiecke beschrieben werden.

Bei einer Ausgestaltung des erfindungsgemäßen Verfahrens weist die bogenförmige Verbindungslinie einen parabeloder kreisbogenförmigen Verlauf auf, welcher die gemessene Objektoberfläche zwischen den Eckpunkten des Ausgangsdreiecks approximiert. Mit dieser Wahl der Verbindungslinie läßt sich in den meisten Fällen eine gute Annäherung der gemessenen Objektoberfläche erreichen bei geringem Rechenaufwand.

Eine vorteilhafte Weiterbildung des erfindungsgemäßen Verfahrens sieht vor, daß der neue Eckpunkt von den zwei benachbarten Eckpunkten des Ausgangsdreiecks einen gleich großen Abstand aufweist. Ausgehend von der Annahme, daß in den zwei Eckpunkten des Ausgangsdreiecks Meßwerte (z.B. Potentialwerte) vorliegen, wird der neue Eckpunkt in die Ebene gelegt, welche senkrecht auf der geraden Verbindungslinie mittig zwischen diesen beiden Eckpunkten liegt. Erfahrungsgemäß entspricht oftmals an dieser Stelle der reale Wert dem Mittelwert der Meßwerte in diesen Eckpunkten.

Eine Anordnung zur Durchführung des Verfahrens nach Anspruch 1 umfaßt:

- eine Meßeinrichtung zum Erfassen der Ortsinformation von Punkten einer Objektoberfläche und der Information über die Normalen in diesen Punkten auf die Objektoberfläche,
- einen Bildspeicher zum Speichern dieser Orts- und Normaleninformationen,
- eine Bildverarbeitungseinheit zur Erstellung einer näherungsweisen Beschreibung der Objektoberfläche durch Dreiecksflächen mit Hilfe der Boundary-Element-Methode und
- eine Recheneinheit zur Berechnung weiterer neuer Eckpunkte zur Bestimmung von Teildreiecksflächen, welche die Ausgangsdreiecke ersetzen.

Eine Anwendung des erfindungsgemäßen Verfahrens ist möglich bei einer solchen Anordnung zur Rekonstruktion der Stromdichteverteilung in einem biologischen Objekt, welche zusätzlich umfaßt:

- eine Meßanordnung zur Bestimmung der magnetischen Flußdichte und/oder der elektrischen Feldstärke außerhalb des Objektes,
- eine Speichereinrichtung zur Speicherung der dabei gewonnenen Flußdichte- und/oder Feldstärkewerte,
- eine Bild-Meßanordnung zur Erstellung von Bildern des Objekts und
- eine Rekonstruktionseinheit zur Bestimmung der Stromdichteverteilung in dem Objekt.

In einer erfindungsgemäßen Weiterbildung ist vorgesehen, daß eine Benutzerschnittstelle zur Steuerung des Verfahrens vorhanden ist.

Mit Hilfe dieser Benutzerschnittstelle kann der Benutzer beispielsweise den Verfeinerungsgrad angeben, d.h. wie oft das Verfahren nacheinander angewendet wird, um die Genauigkeit der Oberflächenbeschreibung zu erhöhen. Damit ist es auch möglich, nur einen bestimmten Bereich der Oberfläche auszuwählen, der mit dem erfindungsgemäßen Verfahren weiter verfeinert werden soll.

Die Erfindung wird nachstehend anhand der Zeichnung näher erläutert. Es zeigen:

Fig. 1     ein Prinzipschaltbild einer Anordnung zur Ausführung des erfindungsgemäßen Verfahrens,

Fig. 2     ein Schema zur Verdeutlichung der Rechenschritte der Quellenrekonstruktion,

Fig. 3     ein Schema zur Unterteilung von Dreiecksflächen in Teildreiecksflächen bei der BEM,

Fig. 4     einen Schnitt durch einen Modellkörper mit Darstellung der wichtigsten Größen zur Bestimmung eines neuen Eckpunktes nach dem erfindungsgemäßen Verfahren,

Fig. 5a    eine Darstellung einer durch Dreiecksflächen angenäherten Kugeloberfläche und

Fig. 5b    eine Darstellung der durch das erfindungsgemäße Verfahren verbessert angenäherten Kugeloberfläche.

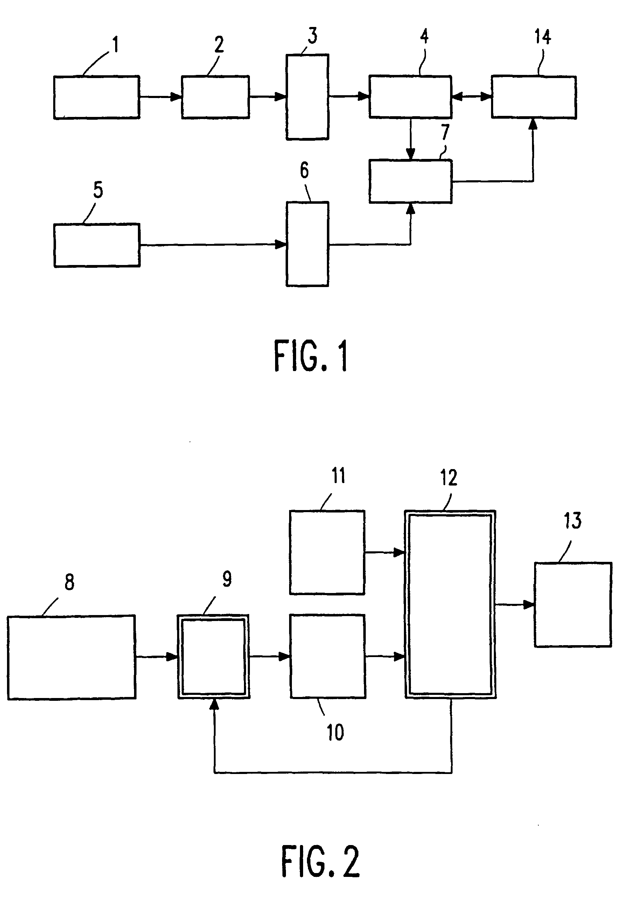

Ein Prinzipschaltbild einer Anordnung zur Rekonstruktion der Stromdichteverteilung in einem biologischen Objekt, beispielsweise im Herzen oder im Gehirn eines Menschen, ist in Fig. 1 dargestellt. Eine Bild-Meßanordnung 1, beispielsweise ein CT-Röntgentomograph oder eine MR-Meßanordnung, ermittelt eine Anzahl von Schichtbildern oder 3D-Bildern des zu untersuchenden Objekts. Aus diesen Bildern erstellt eine Bildverarbeitungseinheit 2 ein Körpermodell, das die Objektoberfläche durch eine Anzahl von Dreiecksflächen näherungsweise beschreibt. Die Ortsinformation in den Eckpunkten dieser Dreiecke und die Normalen in diesen Eckpunkten auf die Objektoberfläche werden in einem Bildspeicher 3 abgelegt. Mit diesen Bildwerten wird in der Recheneinheit 4 ein verfeinertes Netz zur Oberflächenbeschreibung nach dem erfindungsgemäßen Verfahren berechnet. Physikalische Meßwerte, z. B. der elektrischen Feldstärke oder der magnetischen Flußdichte, werden an einer Mehrzahl von Punkten außerhalb des Objekts von einem Meßsystem 5, beispielsweise einem Meßsystem mit einer supraleitenden Gradiometeranordnung, gemessen. Derartige Meßsysteme sind bekannt (DE-OS 37 35 668). Diese Meßwerte werden ebenfalls in einer Speichereinrichtung 6 gespeichert. In der Rekonstruktionseinheit 7 wird schließlich aus den gespeicherten physikalischen Meßwerten und den berechneten Bildwerten die Stromdichteverteilung in dem Objekt rekonstruiert nach der bekannten Methode (vgl. IEEE Trans. on Biomed. Eng., Vol. 36, No. 3, S. 382 bis 391).

Über eine Benutzerschnittstelle 14 kann der Benutzer das Verfahren beeinflussen, beispielsweise die Verfeinerung erhöhen, indem er die von der Recheneinheit 4 ausgeführten Verfahrensschritte mehrmals hintereinander ausführt. Er kann auch bestimmen, durch wieviele Teildreiecke ein Ausgangsdreieck ersetzt wird. Dazu kann der Benutzer insbesondere auch auf die Ausgaben der Recheneinheit 4 und der Rekonstruktionseinheit 7 über die Benutzerschnittstelle 14 zugreifen.

Das in Fig. 2 dargestellte Schema verdeutlicht, welche Rechenschritte bei der Rekonstruktion der Quellen eines gemessenen elektrischen und/oder magnetischen Feldes im wesentlichen erforderlich sind. Mit 8 ist die Menge der Eingangsdaten für das Rekonstruktionsverfahren bezeichnet. Diese enthält Informationen zur näherungsweisen Beschreibung der Oberflächen des Körperteils, von dem das elektrische und/oder magnetische Feld gemessen ist. Bei der BEM sind diese Informationen aus der 3D-Scanning-Technik gewonnene Bilddaten, die den Körper durch ein geschlossenes Netz von Oberflächendreiecken beschreiben, von deren Eckpunkten die Koordinaten bekannt sind. Weiterhin sind als Eingangsdaten die Normalen auf die Körperoberfläche in diesen Eckpunkten bekannt. Diese Eingangsdaten werden im mit 9 bezeichneten Verfahrensschritt in einer Rechenschaltung mit Hilfe der BEM verarbeitet, was anhand der nachfolgenden Figuren näher erläutert wird. Als Ergebnis liefert dieser Verfahrensschritt berechnete Daten 10 über das elektrische und/oder magnetische Feld einer für die Berechnung angenommenen Stromdichteverteilung. Diese Daten 10 werden mit den gemessenen Daten 11 des elektrischen und/oder magnetischen Feldes im darauffolgenden, mit 12 bezeichneten Verfahrensschritt verglichen. Bei zu großer Abweichung der Daten voneinander wird mit geänderter angenommener Stromdichteverteilung mit Verfahrensschritt 9 fortgefahren solange, bis eine geforderte Genauigkeit, mit der berechnete Daten 10 und gemessene Daten 11 übereinstimmen sollen, erreicht ist. Als Ergebnis ergibt sich die Stromdichteverteilung 13 in dem Körper, dessen elektrisches und/oder magnetisches Feld gemessen wurde.

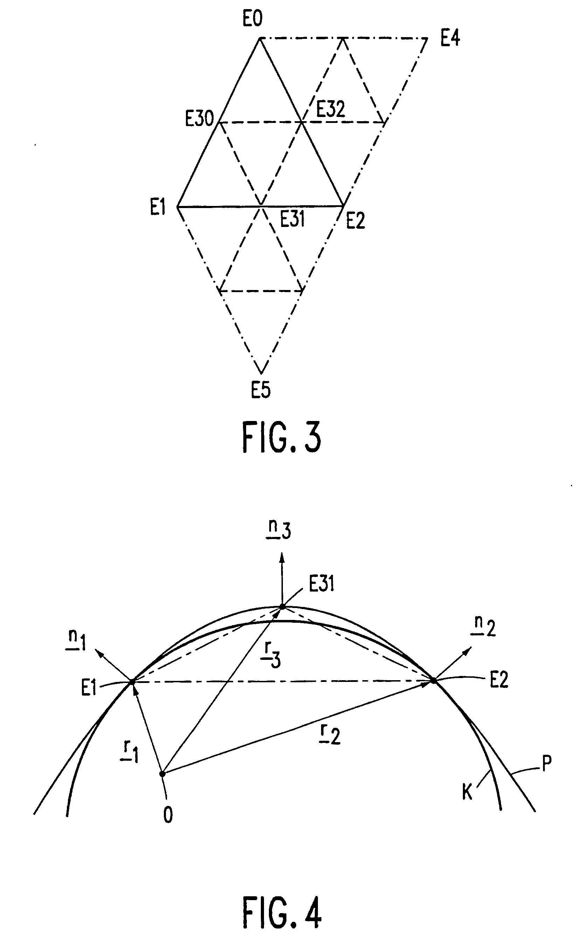

In Fig. 3 ist gezeigt, nach welchem Schema bei der BEM eine Unterteilung von Dreiecksflächen in kleinere Teildreiecksflächen erfolgt. Dargestellt ist ein Ausschnitt eines vorgegebenen Netzes von Dreiecksflächen mit Eckpunkten E0, E1, E2, E4 und E5. Das Dreieck E0-E1-E2 wird bei dem bekannten Verfahren unterteilt, indem auf der Mitte jeder Seitenlinie ein neuer Eckpunkt E30, E31 und E32 gewählt wird, so daß insgesamt 4 Teildreiecke entstehen, welche in der gleichen Ebene wie das Ausgangsdreieck E0-E1-E2 liegen.

Erfindungsgemäß wird ein neuer Eckpunkt nicht auf eine Seitenlinie des Ausgangsdreiecks gelegt, sondern senkrecht über die Mitte der Seitenlinie außerhalb der Zeichenebene der Fig. 3. Nur für die Ausnahmefälle, daß die Normalen zweier benachbarter Eckpunkte genau entgegengesetzt oder genau senkrecht zur Verbindungslinie gerichtet sind, ergibt sich, daß der dazwischenliegende neue Eckpunkt auf der Seitenlinie des Ausgangsdreiecks liegt. Da ein neuer Eckpunkt nur von Daten der angrenzenden Eckpunkte abhängt, ist auch bei diesem Verfahren gewährleistet, daß sich aus den neuen Teildreiecken wieder ein geschlossenes Netz zur Oberflächenbeschreibung ergibt. Jeder neue Eckpunkt muß somit auch nur einmal berechnet werden, obgleich er für die Unterteilung zweier Ausgangsdreiecke herangezogen wird. (z.B. der neue Eckpunkt E32 für die Ausgangsdreiecke E0-E1-E2 und E0-E2-E4).

In Fig. 4 ist ein Schnitt durch einen Modellkörper - hier eine Halbkugel - dargestellt, an dem die Berechnung eines neuen Eckpunktes E3 erläutert werden soll. Von den Eckpunkten E1 und E2 eines Ausgangsdreiecks sind die vom Ursprung O ausgehenden Ortsvektoren $\underline{r}_1$ und $\underline{r}_2$ bekannt sowie die Normalenvektoren $\underline{n}_1$ und $\underline{n}_2$ in diesen Eckpunkten auf die Körperoberfläche K. Die Linie E1-E2 als gemeinsame Kante der Dreiecke E1-E2-E0 und E1-E2-E5 aus Fig. 3 geht bei der Unterteilung über in die Linien E1-E31 und E31-E2, die die Körperoberfläche K möglichst gut approximieren soll. Dazu wird eine Parabel P durch die Eckpunkte E1 und E2 gelegt so, daß die Normalen $\underline{n}_1$ und $\underline{n}_2$ senkrecht auf der Parabel P stehen. Die Gleichung für den Ortsvektor $\underline{r}_3$ aller zwischen E1 und E2 auf der Parabel P liegender Punkte E31 lautet:

$$\underline{r}_3(\lambda) = \underline{r}_1 + \lambda \cdot \Delta \underline{r} + \lambda \cdot (1-\lambda) \cdot d \cdot \underline{a} \qquad (1)$$

mit der Abkürzung $\Delta \underline{r} = \underline{r}_2 - \underline{r}_1$.
Der Parameter $\underline{a}$ wird gewählt als

$$\underline{a} = \underline{m} - (\underline{m} \cdot \Delta \underline{r})/(\Delta \underline{r})^2 \cdot \Delta \underline{r}, \qquad (2)$$

wobei

$$\underline{m} = (\underline{n}_1 + \underline{n}_2)/2 \text{ ist.} \qquad (3)$$

Für den Parameter d gilt:

$$d = \frac{(\underline{n}_2 \cdot \Delta \underline{r}) \cdot (\underline{n}_2 \cdot \underline{a}) - (\underline{n}_1 \cdot \Delta \underline{r}) \cdot (\underline{n}_1 \cdot \underline{a})}{(\underline{n}_1 \cdot \underline{a})^2 + (\underline{n}_2 \cdot \underline{a})^2} \qquad (4)$$

bzw. d = 0, falls $(\underline{n}_1 \cdot \underline{a}) = (\underline{n}_2 \cdot \underline{a}) = 0$ ist.
Mit dem Parameter $\lambda \in |0;1|$ kann festgelegt werden, wo auf der Parabel der neue Eckpunkt E31 liegen soll. In Fig. 4 ist $\lambda = 1/2$ gewählt, so daß E31 in der Mitte zwischen E1 und E2 liegt und sich die Gleichung (1) vereinfacht zu

$$\underline{r}_3 = (\underline{r}_1 + \underline{r}_2)/2 + d/4 \cdot \underline{a}. \qquad (5)$$

Aus Gleichung (5) läßt sich also mit Gleichung (2) und Gleichung (4) der Ortsvektor $\underline{r}_3$ bestimmen. Die Normale in diesem Punkt E31 ergibt sich durch lineare Approximation der bekannten Normalen für allgemeine $\lambda \in |0;1|$ nach

$$\underline{n}_3(\lambda) = \underline{n}_1 + \lambda \cdot (\underline{n}_2 - \underline{n}_1) \qquad (6)$$

bzw. im dargestellten Fall für $\lambda = 1/2$ nach

$$\underline{n}_3 = (\underline{n}_1 + \underline{n}_2)/2. \qquad (7)$$

Ausgehend von einer gegebenen Anzahl von N Eckpunkten wird aus der Menge von $2 \cdot N - 4$ Dreiecken eine größere Menge von kleineren Teildreiecken geschaffen, die als geschlossenes Netz die Körperoberfläche genauer beschreiben.

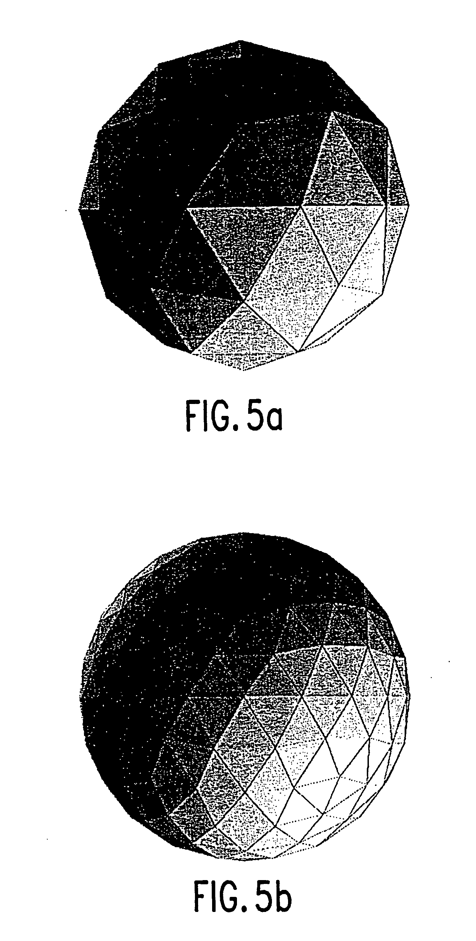

Erkennbar ist dies anhand der Fig. 5a und 5b. In Fig. 5a wird eine Kugel durch 42 Eckpunkte und 80 Dreiecksflächen näherungsweise beschrieben. Die Anwendung des erfindungsgemäßen Verfahrens liefert eine Kugeloberfläche entsprechend Fig. 5b mit 162 Eckpunkten und 320 Teildreiecken. Erkennbar ist durch die unterschiedlichen Graustufen, wie die Teildreiecke räumlich aus den planen Dreiecksflächen der Beschreibung nach Fig. 5a herauskommen.

Die Summe der Flächen von 320 ebenen Dreiecken, welche eine Kugeloberfläche näherungsweise beschreiben, weicht um etwa 2% vom exakten Wert der Kugeloberfläche ab. Eine Verfeinerung des Dreiecksnetzes in der Dreiecksebene bringt keine Verbesserung, während nach einer räumlichen Verfeinerung nach dem erfindungsgemäßen Verfahren die Oberflächenbeschreibung durch 1280 Dreiecke lediglich um 0,2% vom exakten Wert abweicht.

In einer weiteren Vergleichsrechnung wurde in einer Kugel mit dem Radius 1 an einem Punkt mit der Entfernung 0,8 vom Kugelmittelpunkt ein Stromdipol angenommen. Die Kugel sei durch 320 ebene Dreiecksflächen beschrieben. Als maximaler Fehler für das Potential bezogen auf das Potential auf einer analytisch exakt beschriebenen Kugeloberfläche ergab sich 11%. Mit einer Unterteilung jedes der 320 Dreiecke in vier Teildreiecke nach dem bekannten Verfahren ergab sich ein maximaler Fehler von 9,7%, nach einer weiteren Unterteilung jeweils in vier Teildreiecke betrug der Fehler 9,4%. Eine Unterteilung der 320 Ausgangsdreiecke in jeweils vier räumlich angepaßte Teildreiecke verringerte den maximalen Fehler auf 2,8%, mit einer weiteren räumlich angepaßten Unterteilung in jeweils weitere vier Teildreiecke wurde ein maximaler Fehler von 0,8% erreicht.

Wie gezeigt, verringert das erfindungsgemäße Verfahren den Fehler etwa um den Faktor 10. Bei einer geforderten Rekonstruktionsgenauigkeit ist also eine etwa 10-fach geringere Zahl an Oberflächenelementen erforderlich. Da der Speicherbedarf bei der BEM proportional zum Quadrat der Anzahl der Oberflächenelemente und die Rechenzeit proportional zur dritten Potenz dieser Anzahl ist, verringert sich der Speicherbedarf etwa um den Faktor 100 und die Rechenzeit etwa um den Faktor 1000. Lediglich der Aufwand zur Berechnung der neuen Eckpunkte ist hier größer gegenüber der bekannten Zerlegung in plane Teildreiecke.

Um den Aufwand für Speicherung und Rechenzeit möglichst gering zu halten bei der Berechnung des verfeinerten Dreiecknetzes nach dem erfindungsgemäßen Verfahren, kann jedes Ausgangsdreieck auch nur durch beispielsweise zwei Teildreiecke ersetzt werden, wozu nur die Berechnung eines einzigen neuen Eckpunktes pro Ausgangdreieck erforderlich ist. Andererseits kann auch die Genauigkeit beliebig erhöht werden, indem jedes Teildreieck durch weitere Teildreiecke ersetzt wird, wozu das erfindungsgemäße Verfahren mehrmals hintereinander durchgeführt wird. Es kann auch mehr als ein Eckpunkt auf der Verbindungslinie zweier Eckpunkte eines Ausgangsdreiecks gewählt werden. Es ist jedoch erforderlich, daß sich durch jede Verfeinerung der Oberflächenbeschreibung wiederum ein geschlossenes Netz ergibt.

Weitere Anwendungsmöglichkeiten des erfindungsgemäßen Verfahrens sind beispielsweise die Berechnung der Masse oder des Trägheitsmomentes eines beliebigen räumlichen Objektes, z.B. der Tragflächen eines Flugzeugs.

**Patentansprüche**

1. Verfahren zur Nachbildung der Oberfläche eines Objekts, bei dem eine geschlossene Objektoberfläche (K) durch eine Anzahl von Dreiecksflächen näherungsweise beschrieben ist, von denen die Lage der drei Eckpunkte (E0,E1, E2) sowie in diesen Eckpunkten (E0,E1, E2) die Normalen auf die Objektoberfläche (K) bekannt sind und welche zur Verbesserung dieser näherungsweisen Beschreibung durch Teildreiecksflächen ersetzt werden, bei denen maximal zwei Eckpunkte mit Eckpunkten eines Ausgangsdreiecks (E0,E1, E2) übereinstimmen, **dadurch gekennzeichnet, daß** durch zwei Eckpunkte des Ausgangsdreiecks (E1, E2) eine bogenförmige Verbindungslinie (P) im Raum gelegt wird derart, daß die Verbindungslinie (P) senkrecht zu den zwei Normalen ($\underline{n}_1$, $\underline{n}_2$) in den genannten zwei Eckpunkten des Ausgangsdreiecks (E1, E2) verläuft, und daß ein neuer Eckpunkt eines Teildreiecks (E31) auf der bogenförmigen Verbindungslinie (P) gewählt wird.

2. Verfahren nach Anspruch 1, **dadurch gekennzeichnet, daß** die bogenförmige Verbindungslinie (P) einen parabel- oder kreisbogenförmigen Verlauf aufweist, welcher die Objektoberfläche (K) zwischen den Eckpunkten des Ausgangsdreiecks (E1, E2) approximiert.

3. Verfahren nach Anspruch 1 oder 2, **dadurch gekennzeichnet, daß** der neue Eckpunkt (E31) von den zwei benachbarten Eckpunkten des Ausgangsdreiecks (E1, E2) einen gleich großen Abstand aufweist.

4. Anordnung zur Durchführung sämtlicher Schritte des Verfahrens nach Anspruch 1 mit

   - einer Meßeinrichtung (1) zum Erfassen der Ortsinformation von Punkten einer Objektoberfläche (K) und der Information über die Normalen ($n_1$, $n_2$) in diesen Punkten auf die Objektoberfläche (K),
   - einem Bildspeicher (3) zum Speichern dieser Orts- und Normaleninformationen,
   - einer Bildverarbeitungseinheit (2) zur Erstellung einer näherungsweisen Beschreibung der Objektoberfläche (K) durch Dreiecksflächen mit Hilfe der Boundary-Element-Methode und
   - einer Recheneinheit (4) zur Berechnung weiterer neuer Eckpunkte (E31) zur Bestimmung von Teildreiecksflächen, welche die Ausgangsdreiecke ersetzen.

5. Anordnung nach Anspruch 4, zur Rekonstruktion der Stromdichteverteilung in einem biologischen Objekt mit zusätzlich

   - einer Meßanordnung (5) zur Bestimmung der magnetischen Flußdichte und/oder der elektrischen Feldstärke außerhalb des Objektes,
   - einer Speichereinrichtung (6) zur Speicherung der dabei gewonnenen Flußdichte- und/oder Feldstärkewerte,
   - einer Bild-Meßanordnung (1) zur Erstellung von Bildern des Objekts und
   - einer Rekonstruktionseinheit (7) zur Bestimmung der Stromdichteverteilung in dem Objekt.

6. Anordnung nach Anspruch 5, **dadurch gekennzeichnet, daß** die Bild-Meßanordnung (1) ein Röntgen-Computertomograph oder eine Magnetresonanzanordnung ist.

7. Anordnung nach einem der Ansprüche 4 bis 6, **dadurch gekennzeichnet, daß** eine Benutzerschnittstelle zur Steuerung des Verfahrens vorhanden ist.

**Claims**

1. A method of reconstructing the surface of an object by means of the boundary element method, in which a measured, closed object surface (K) is approximately described by a number of triangles, the position of the three vertices (E0, E1, E2) of which is known and also the normals to the measured object surface (K) in these vertices (E0, E1, E2), said triangles being replaced by sub-triangles, having no more than two vertices corresponding to vertices of an initial triangle (E0, E1, E2), in order to enhance said approximative description, **characterized in that** a curved connecting line (P) is drawn in space through two vertices of the initial triangle (E1, E2) in such a manner that the connecting line (P) extends perpendicularly to the two normals ($n_1$, $n_2$) at said two vertices of the initial triangle (E1, E2), and that a new vertex of a sub-triangle (E31) is chosen on the curved connecting line (P).

2. A method as claimed in claim 1, **characterized in that** the curved connecting line (P) is shaped as a parabola or a segment of circle approximating the measured object surface (K) between the vertices of the initial triangle (E1, E2).

3. A method as claimed in claim 1 or 2, **characterized in that** the new vertex (E31) is situated at equal distances from the two neighboring vertices of the initial triangle (E1, E2).

4. A device for carrying out all steps of the method claimed in claim 1, comprising:

   - a measuring device (1) for acquiring the position information of points on an object surface (K) and also the information concerning the normals ($n_1$, $n_2$) to the object surface (K) in these points,
   - an image memory (3) for storing said position and normal information,
   - an image processing unit (2) for forming an approximative description of the object surface (K) by triangles by means of the boundary element method, and
   - an arithmetic unit (4) for calculating further new vertices (E31) in order to determine sub-triangles which replace the initial triangles.

5. A device as claimed in claim 4 for the reconstruction of the current density distribution in a biological object, also comprising:

   - a measuring device (5) for determining the magnetic flux density and/or the electric field strength outside the object,
   - a storage device (6) for storing the flux density and/or field strength values thus acquired,
   - an image forming device (1) for forming images of the object, and

- a reconstruction unit (7) for determining the current density distribution in the object.

6. A device as claimed in claim 5, **characterized in that** the image forming device (1) is an X-ray computer tomograph or a magnetic resonance imaging device.

7. A device as claimed in one of the claims 4 to 6, **characterized in that** a user interface is provided for controlling of the method.


**Revendications**

1. Procédé de reconstruction de la surface d'un objet, dans lequel une surface d'objet (K) fermée est décrite approximativement par un nombre de surfaces triangulaires dont la position des trois points angulaires (E0, E1, E2) ainsi que, dans ces points angulaires (E0, E1, E2), les normales sur la surface de l'objet (K) sont connues et qui sont remplacées pour le perfectionnement de cette description approximative par des surfaces triangulaires partielles, deux points angulaires maximum correspondant aux points angulaires d'un triangle de sortie (E0, E1, E2),

    **caractérisé en ce que**, par deux points angulaires du triangle de sortie (E1, E2), une ligne de jonction arquée (P) est tirée dans l'espace de telle sorte que la ligne de jonction (P) s'étende perpendiculairement aux deux normales ($n_1$, $n_2$) dans lesdits deux points angulaires du triangle de sortie (E1, E2) et qu'un nouveau point angulaire d'un triangle partiel (E31) soit sélectionné sur la ligne de jonction (P) arquée.

2. Procédé selon la revendication 1,
    **caractérisé en ce que** la ligne de jonction (P) arquée présente un tracé parabolique ou en arc de cercle qui approche la surface mesurée de l'objet (K) entre les points angulaires du triangle de sortie (E1, E2).

3. Procédé selon l'une des revendications 1 ou 2,
    **caractérisé en ce que** le nouveau point angulaire (E31) est situé à égale distance entre les deux points angulaires voisins du triangle de sortie (E1, E2).

4. Dispositif de mise en oeuvre des toutes les étapes du procédé selon la revendication 1 avec :

    - un dispositif de mesure (1) pour la saisie de l'information locale de points d'une surface d'objet (K) et de l'information sur les normales ($n_1$, $n_2$) dans ces points sur la surface de l'objet (K);
    - une mémoire d'images (3) pour l'enregistrement de ces informations sur l'emplacement et les normales,
    - une unité de traitement d'images (2) pour l'élaboration d'une description approximative de la surface de l'objet (K) par des surfaces triangulaires à l'aide de la méthode boundary-element et
    - une unité de calcul (4) pour le calcul d'autres nouveaux points angulaires (E31) pour la détermination de surfaces triangulaires partielles qui remplacent les triangles de sortie.

5. Dispositif selon la revendication 4 pour la reconstruction de la distribution de la densité de courant dans un objet biologique qui comprend par ailleurs :

    - un dispositif de mesure (5) pour la détermination de la densité du flux magnétique et/ou l'intensité de champ électrique en dehors de l'objet;
    - un dispositif de mémoire (6) pour l'enregistrement des valeurs de densité du flux et/ou d'intensité du champ obtenues à cette occasion;
    - un dispositif de mesure de l'image (1) pour l'élaboration d'images de l'objet et une unité de reconstruction (7) pour la détermination de la distribution de la densité de courant dans l'objet.

6. Dispositif selon la revendication 5,
    **caractérisé en ce que** le dispositif de mesure de l'image (1) est un tomographe informatisé ou un dispositif à résonance magnétique nucléaire.

7. Dispositif selon l'une des revendications 4 à 6, **caractérisé en ce qu'**une interface d'utilisateur est présente pour la commande du procédé.

FIG. 1

FIG. 2

FIG. 3

FIG. 4

FIG. 5a

FIG. 5b